(19) Europäisches Patentamt
European Patent Office
Office européen des brevets

(11) **EP 4 539 012 A1**

(12) **EUROPEAN PATENT APPLICATION**
published in accordance with Art. 153(4) EPC

(43) Date of publication:
**16.04.2025 Bulletin 2025/16**

(21) Application number: **23820130.5**

(22) Date of filing: **09.06.2023**

(51) International Patent Classification (IPC):
*G08G 1/0968* (2006.01)   *H04W 4/40* (2018.01)
*B60W 60/00* (2020.01)   *B60W 40/02* (2006.01)
*H04W 4/38* (2018.01)   *H04W 12/12* (2021.01)
*G06T 7/70* (2017.01)

(52) Cooperative Patent Classification (CPC):
**B60W 40/02; B60W 60/00; G06T 7/70;
G08G 1/0968; H04W 4/38; H04W 4/40;
H04W 12/12**

(86) International application number:
**PCT/KR2023/007919**

(87) International publication number:
**WO 2023/239195 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.06.2022   KR 20220070266
29.08.2022   KR 20220108677**

(71) Applicant: **LG Electronics Inc.
Yeongdeungpo-gu
Seoul 07336 (KR)**

(72) Inventors:
• **LEE, Yoonjong**
  **Seoul 06772 (KR)**
• **SEO, Hanbyul**
  **Seoul 06772 (KR)**
• **KIM, Myoungseob**
  **Seoul 06772 (KR)**
• **KWAK, Minsung**
  **Seoul 06772 (KR)**
• **BYUN, Jaihyun**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING AND RECEIVING SIGNALS IN WIRELESS COMMUNICATION SYSTEM**

(57)   A method by which a first device performs maneuver driving in an intelligent transportation system (ITS) according to various embodiments may comprise: receiving a vehicle-to-everything (V2X) message related to a maneuver sharing and coordinating service (MSCS) from a second device; and determining whether to perform cooperative driving with the second device on the basis of the V2X message.

**FIG. 15**

## Description

## TECHNICAL FIELD

The present disclosure relates to signal transmission and reception in a wireless communication system, and more particularly, to a method of transmitting or receiving signals related to an intelligent transportation system (ITS) and device therefor.

## BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between UEs without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

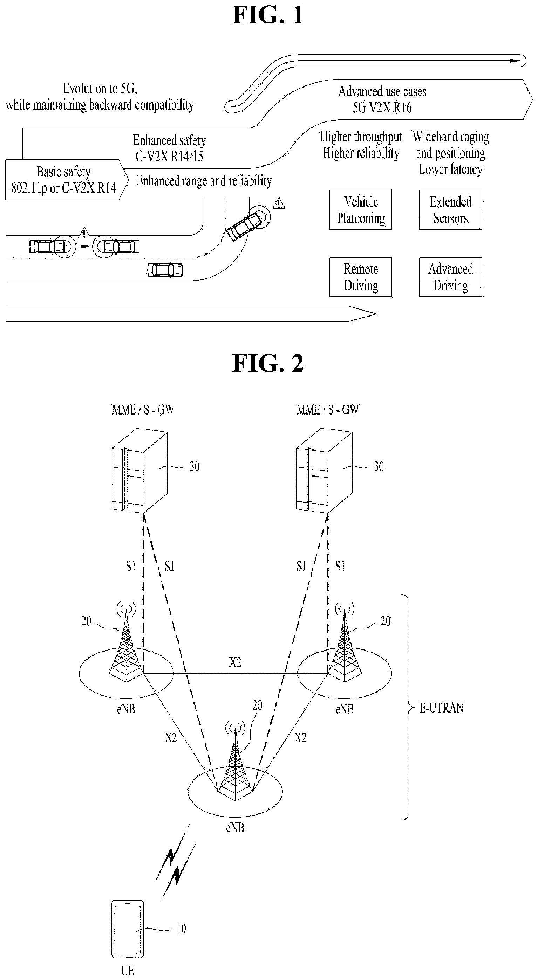

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

### TECHNICAL PROBLEM

The present disclosure aims to provide a method and device for transmitting and receiving signals to perform maneuver driving more accurately and efficiently in an intelligent transportation system (ITS).

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of performing maneuver driving by a first device in an intelligent transportation system (ITS). The method may include: receiving a vehicle-to-everything (V2X) message related to a maneuver sharing and coordinating service (MSCS) from a second device; and determining whether to perform cooperative driving with the second device based on the V2X message.

The first device may determine to perform the cooperative driving with the second device based on that a reliability assessment of the V2X message is more than or equal to a threshold.

The reliability assessment may be performed based on a correlation between first object information included in the V2X message and second object information obtained by a sensor equipped in the first device.

A maneuver negotiation procedure with the second device may be performed based on that the reliability assessment of the V2X message is more than or equal to the threshold.

The first device may perform the reliability assessment based on results of comparing at least one of location information, appearance information, or movement information included in the first object information with at least one of location information, appearance information, or movement information included in the second object information, respectively.

The V2X message may be related to at least one of a basic safety message (BSM), a sensor data sharing message (SDSM), or a maneuver sharing and coordinating message (MSCM).

The first device may stop a maneuver negotiation procedure with the second device based on that the reliability assessment of the V2X message is less than the threshold.

The method may further include determining, by the first device, misbehavior of the second device based on that the reliability assessment of the V2X message is less than the threshold.

The method may further include transmitting, by the first device, a signal for reporting the misbehavior of the second device to a misbehavior authority (MA) device

The first device may identify the second device.

In another aspect of the present disclosure, provided herein is a first device configured to execute the above-described method.

In another aspect of the present disclosure, provided herein is a computer-readable recording medium having recorded thereon a program for executing the above-described method.

### ADVANTAGEOUS EFFECTS

According to an embodiment of the present disclosure, maneuver driving may be performed more accurately and efficiently by determining whether to proceed with the maneuver driving based on the reliability assessment of V2X messages transmitted and received between devices.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram for explaining by comparing vehicle-to-everything (V2X) communication based on radio access technology (RAT) before New Radio (NR) and V2X communication based on NR.

FIG. 2 illustrates the structure of a Long Term Evolution (LTE) system to which embodiment(s) are applicable.

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 illustrates a radio protocol architecture for sidelink (SL) communication.

FIG. 7 illustrates UEs performing V2X or SL communication.

FIG. 8 illustrates resource units for V2X or SL communication.

FIG. 9 illustrates a basic maneuver sharing and coordinating service (MSCS) protocol state flow defined in J3186. Potential maneuver driving obstacles and misbehavior elements may be identified in advance.

FIG. 10 is a diagram for explaining comparison between a message from a V2X message transmitting vehicle and remote sensing (video) object detection information.

FIG. 11 illustrates a conceptual diagram of infrastructure security monitoring for each cooperative intelligent transport system (C-ITS) component.

FIG. 12 is a diagram illustrating control for selecting the shortest gate for vehicles passing through a toll gate.

FIGS. 13 and 14 illustrate report flows for fusion, comparison, and determination of video sensing object detection results and a V2X message such as a basic safety message (BSM) and a sensor data sharing message (SDSM) along with information discrepancies in an initial maneuver driving environment.

FIG. 15 illustrates a flow of a method of transmitting and receiving signals for maneuver driving according to an embodiment of the present disclosure.

FIG. 16 illustrates an information flow for normative maneuver cooperation driving in V2V specified in the European Telecommunications Standards Institute (ETSI) TR 103 578.

FIG. 17 illustrates the basic structure of a maneuver coordination message (MCM) currently under discussion in ETSI TR 103 578.

FIG. 18 illustrates a flow of an MSCS protocol state where maneuver driving support information is applied for determination.

FIG. 19 illustrates a communication system applied to the present disclosure.

FIG. 20 illustrates wireless devices applicable to the present disclosure.

FIG. 21 illustrates another example of a wireless device to which the present disclosure is applied.

FIG. 22 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

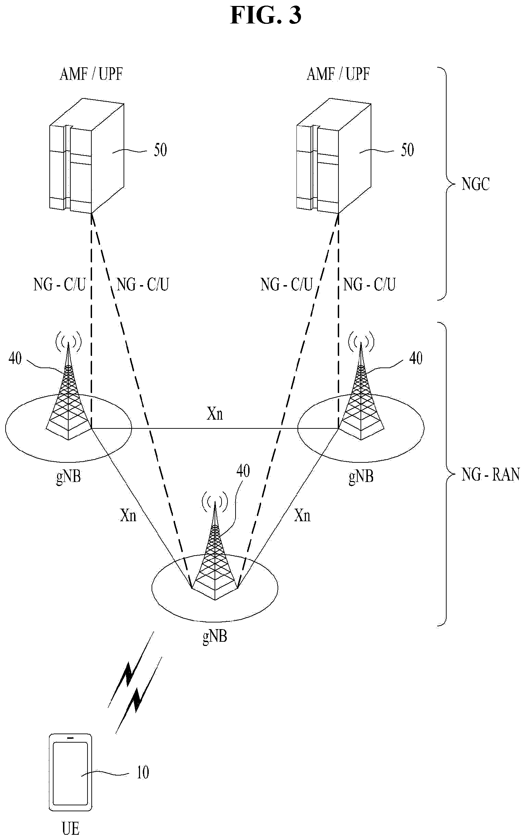

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

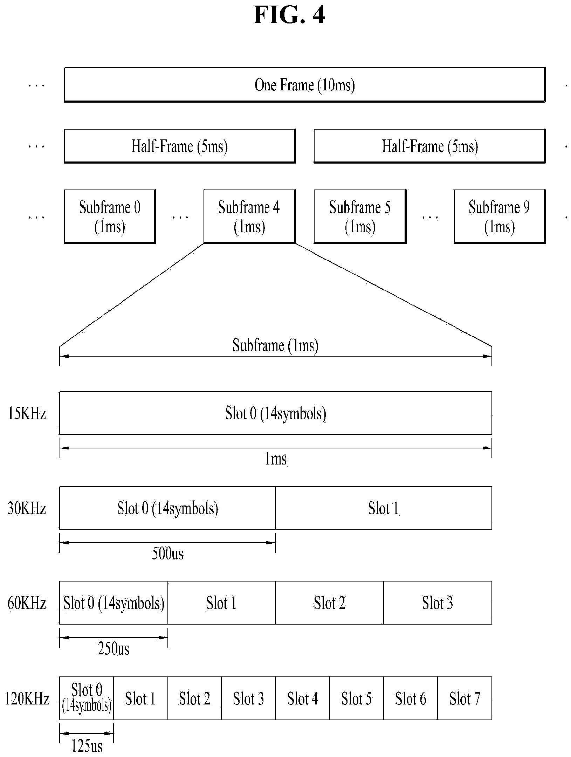

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |

(continued)

| SCS (15*2u) | $N^{slot}_{symb}$ | $N^{frame,u}_{slot}$ | $N^{subframe,u}_{slot}$ |
|---|---|---|---|
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{subframe,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

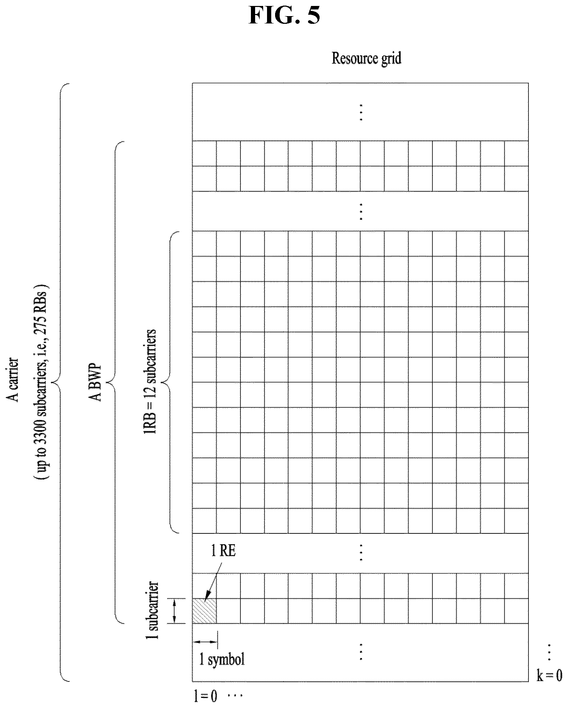

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

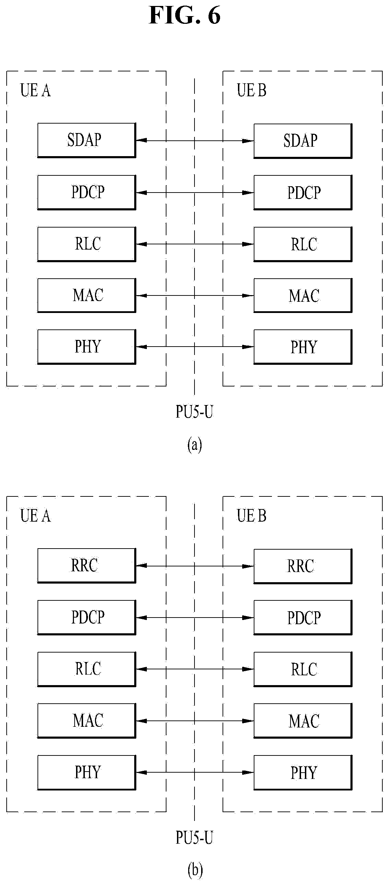

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

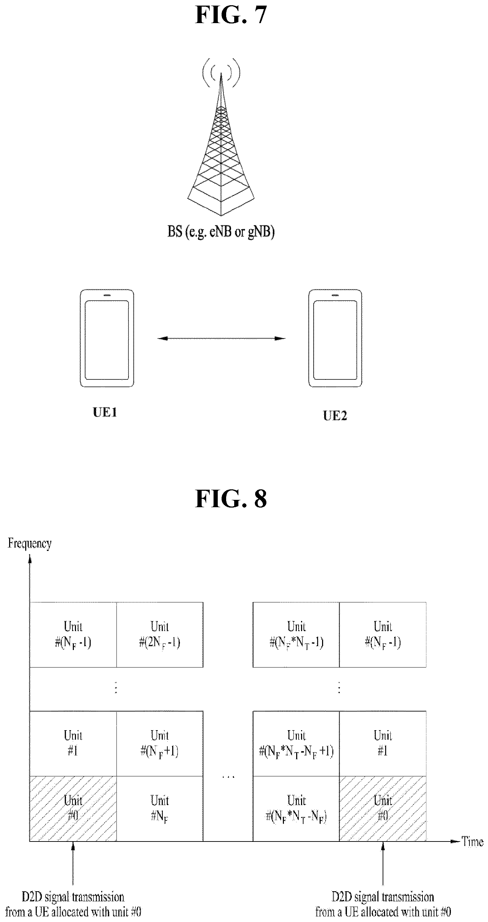

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

## Determination of Maneuver Driving Based on Fusion of V2X Message and Sensing Information

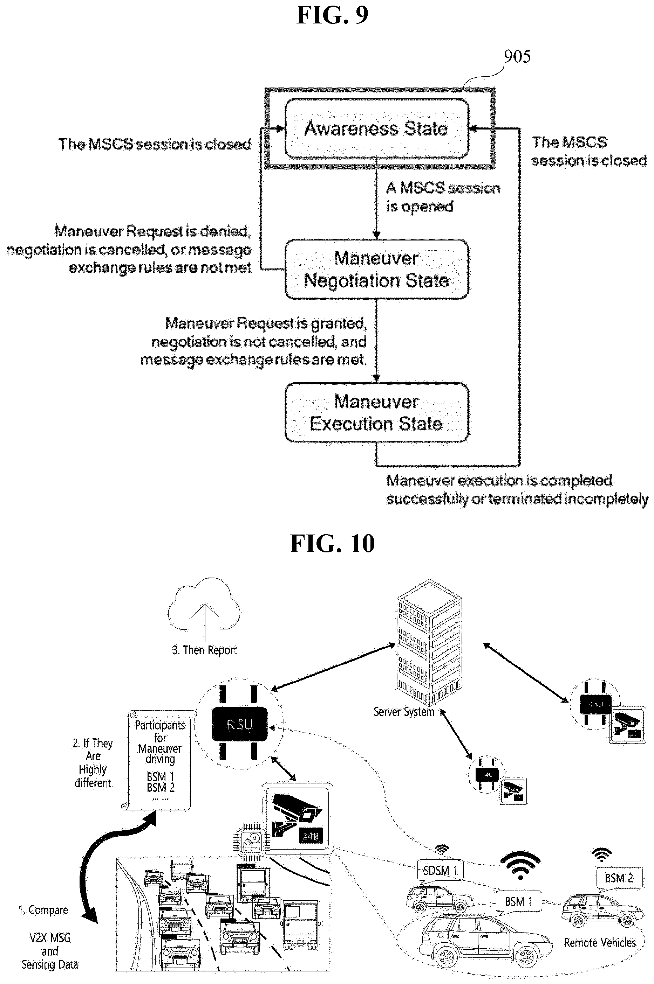

FIG. 9 illustrates a basic maneuver sharing and coordinating service (MSCS) protocol state flow defined in J3186.

The maneuver driving use cases and requirements of SAE J3186 (Application Protocol and Requirements for Maneuver Sharing and Coordinating Service) have been written based solely on V2V standards. In the MSCS's awareness state, a maneuver driving entity (e.g., vehicle or RSU) should determine that the surrounding conditions are sufficient to perform intended maneuver driving by receiving a basic safety message (BSM). Additionally, before moving to the maneuver negotiation state, a sensor data sharing message (SDSM) or intent-sharing cooperation information may be supplementary used.

The entity leading maneuver driving collects vehicle information or surrounding conditions from received V2X messages (e.g., BSM, SDSM, etc.) and identifies vehicles that perform the maneuver driving based on the TemporaryID information within the V2X messages. The entity determines a connected vehicle (CV) for the identified vehicles and prepares one or more sub-maneuvers for driving.

In this way, the recognition of vehicles participating in maneuver driving within the MSCS's awareness state, which is necessary to initiate the maneuver driving, currently relies entirely on V2X messages. There are no standards or verification processes for transitioning to the maneuver negotiation state. For example, Table 5 shows key physical attribute data elements (DEs) in data fields that need to be transmitted by the BSM.

[Table 5]

| BSM | DE_Latitude<br>-- in 1/10th microdegrees<br>= INTEGER (-900000000..900000001)<br>-- LSB = 1/10 microdegree<br>-- Providing a range of plus-minus 90 degrees | |
|---|---|---|
| | DE_Longitude<br>-- in 1/10th microdegrees<br>= INTEGER (-1799999999..1800000001)<br>-- LSB = 1/10 microdegree<br>-- Providing a range of plus-minus 180 degrees | |
| | DE_Speed<br>= INTEGER (0..8191) -- Units of 0.02 m/s<br>-- The value 8191 indicates that<br>-- speed is unavailable | |
| | DE_Heading<br>= INTEGER (0..28800)<br>-- LSB of 0.0125 degrees<br>-- A range of 0 to 359.9875 degrees | |
| | DF_VehicleSize | DE_VehicleWidth<br>= INTEGER (0..1023) -- LSB units are 1 cm with a range of >10 meters |
| | | DE_VehicleLength<br>= INTEGER (0.. 4095) -- LSB units of 1 cm with a range of >40 meters |

The transmission rate of the BSM is typically 10 times per second on the assumption that the transmission speed is not reduced by a congestion control algorithm. The BSM containing the above information is generally received and processed at a rate of approximately 10 times per second. However, if a vehicle transmits the BSM with forged or tampered sender-vehicle fields (transmission time, appearance information, or location), which are different from actual sender-vehicle information, for any reason, it may impact the reliability of maneuver execution. Table 6 shows MCSC misbehavior that may occur during maneuver driving, which is defined by the current maneuver driving standard, SAE-J3186. Vehicles need to be able to detect and avoid such misbehavior and report the misbehavior to a misbehavior authority (MA) if necessary.

[Table 6]

| | Misbehavior Determination (MBD) |
|---|---|
| 1 | Vehicles do not transmit maneuver sharing and coordinating messages (MSCMs) in a correct sequence (e.g., a cancellation message in response to a request message). |
| 2 | The vehicle transmits an MSCM containing TRR characteristics or current status that is invalid, inaccurate, or unauthorized in terms of TRR, geography, "surrounding vehicles," or movement/temporal data. |
| 3 | The vehicle transmits an MSCM with incorrect sender-vehicle fields (e.g., transmission time, location, etc.). |
| 4 | Minor errors (e.g., when the adjustment of a proposal is unreasonable due to the rejection of a maneuver driving request). |
| 5 | Failure to transmit a response message to a legitimate request (this may be a channel error rather than misbehavior - in this cases, the OEM may flag the vehicle as suspicious). |

Among the misbehavior elements listed above, misbehavior elements 1, 4, and 5 may only be identified and addressed after maneuver driving has started and MSCM exchange has occurred. However, for misbehavior elements 2 and 3, if the reliability of data from a V2X message is capable of being verified in advance in the MSCS's awareness state before the start of the maneuver driving negotiation, it is possible to reduce the likelihood of misbehavior elements occurring in the V2X message being transmitted to an MSCS session and causing misbehavior.

Therefore, the present disclosure proposes a sequence of comparing physical attribute information within a V2X message with the results of remote sensing object detection in in MSCS's awareness state and a method for determining similarity thereof. The present disclosure proposes a method for determining, through analysis, whether to proceed to the MSCS's negotiation state, and in the event of a maneuver suspension, a method for notifying discrepancy details to both a vehicle with discrepancies between the V2X message and sensing information and a MA.

As described above, the current maneuver driving-related technical standards rely entirely on V2X messages for acquiring vehicle information to recognize participating vehicles. Additionally, while a V2X message is typically generated and transmitted by an on-board equipment (OBE) system installed in a vehicle that transmits the message, if intentional or unintentional tampering or forgery of the V2X message occurs during the early stage of maneuver driving, it may impact various services that rely on the V2X message including the MSCS. Therefore, if determination on whether to proceed with the maneuver driving is based on the verification of the reliability of the participating entity by comparing the V2X message with other sensing information, it may reduce the likelihood of misbehavior during the maneuver driving. Additionally, when a suspected issue is determined to be a situation where a higher level of object detection and positioning is needed for the maneuver driving rather than the misbehavior, if the situation is be directly informed to the entity or if the misbehavior is confirmed and determined to be a potential threat and then reported to the MA, the information may then be used as a reference for other maneuver driving or road management

According to the methods proposed by the present disclosure, to perform the MSCS in the V2X system, when a vehicle is equipped with a functionality of detecting moving objects or when a lead vehicle, cooperating vehicle, RSU, or server, capable of processing this functionality in coordination with other equipment, receives a V2X message in the awareness state to recognize the maneuver driving target vehicle and the surrounding environment, the detection information is compared and analyzed through remote sensing object detection of the vehicle that has transmitted the V2X message in order to ensure accuracy in recognizing the target required for maneuver driving, Based on the results, if there is a discrepancy in information, whether to continue the maneuver driving is determined. When the maneuver driving is suspended, the results may be reported to the vehicle with discrepancy between the sensing and V2X message or to the MA.

According to this method, if tampering or forgery occurs in the transmitted V2X message information, the possibility of maneuver driving disruption or errors may be reduced during a preliminary stage (i.e., awareness state) before the maneuver driving is carried out. By sharing the discrepancy between the sensing and V2X message, potential obstacles to the maneuver driving and potential misbehavior elements may be identified in advance.

FIG. 10 is a diagram for explaining comparison between a message from a V2X message transmitting vehicle and remote sensing (video) object detection information.

1. Requirements for object detection entity for detecting V2X message transmitting vehicle

The object detection entity (e.g., maneuver lead/cooperating vehicle, RSU, server, etc.) needs to be located within a coverage area that allows remote sensing of a V2X message transmitting vehicle to identify vehicles participating in maneuver driving.

The object detection entity may use a detected or installed location as a reference point for relative positioning. When the vehicle is detected based on data from a sensor installed on the object detection entity, the relative position of the vehicle may be identified using predetermined information.

By combining the position of the reference point and the relative position of the vehicle, information on the location of the vehicle may be obtained. Information on the detected and acquired movement of the vehicle may then be compared with the location information received via the V2X message to assess similarity therebetween and identify the vehicle. The object detection entity needs to continuously perform a process of recognizing and classifying all objects in the captured area until the object detection entity receives the V2X message.

2. Data to be measured

The object detection entity, capable of performing object detection, receives V2X messages from surrounding vehicles. These messages include essential physical attribute information (e.g., positioning, speed, direction, vehicle length, and vehicle width of the moving vehicle) as part of the required data fields that should be transmitted. The physical attribute information may also be detected with the same values during the object detection process and may be compared with the information extracted from the messages to confirm the similarity.

The similarity of the physical attribute information detected from both the message reception and remote sensing object detection is compared. If the physical attribute information is determined to be similar, the maneuver driving process may proceed. If the physical attribute information is determined to be dissimilar, the maneuver driving plan may be stopped, and the analysis results may be reported to the vehicle with the discrepancy between the sensing and V2X message data or to the MA. Since current MSCS technology allows the use of the SDSM as auxiliary data for surrounding awareness in maneuver driving participation, similarly to the BSM, if the reliability is verified before the start of the maneuver driving, it may reduce the likelihood of misbehavior. However, if the two messages are always processed concurrently, there are concerns about increases in the data processing volume and resulting effects. In the future, as devices capable of handling such a data bandwidth become available, the verification of physical attribute data fields from two or more messages may be performed simultaneously.

3. Vehicle detection for V2X messages

The physical attribute data fields in a V2X message may be broadly classified into two categories for detection: 1) position and appearance information, and 2) movement information. The V2X message field information corresponding to 1) position & appearance information is compared for consistency and similarity with the results detected through remote sensing via data analysis and processing. For example, in video object detection, the geographic location of a message transmitting object, which is estimated from the pixel position of bounding box coordinates within a video frame, is compared for consistency and similarity in classification (e.g., vehicle, person, etc.) with the size of the message transmitting object (e.g., width, length, etc.). The V2X message field information corresponding to 2) movement information is compared for consistency and similarity with the movement direction and speed of the message transmitting object, which is identified from the position and appearance information.

Ambiguous objects or issues with low detection accuracy that may arise during the detection process should be improved using more advanced object detection methods with higher accuracy and speed. The accuracy of the video object detection mentioned above may vary depending on an object detection algorithm (e.g., R-CNN, YOLO, etc.) and an object detection data set (e.g., PASCAL VOC, ILSVRC, etc.). Additionally, the result determined based on the driving conditions between the detected object information and the V2X message may be used as a criterion for proceeding with maneuver driving. However, the result may also be used merely as a reference logic for determination, and if the result of a suspected issue is deemed to be within the acceptable margin of error for object detection and positioning, the maneuver negotiation state may proceed regardless of the analysis results. If the vehicle transmitting the V2X message is engaging in tampering or forgery, the driving request may be canceled during the negotiation stage. However, since there may be unexpected or sophisticated fraudulent activities, a continuous detection and monitoring process for such behaviors may be necessary throughout the entire maneuver driving process.

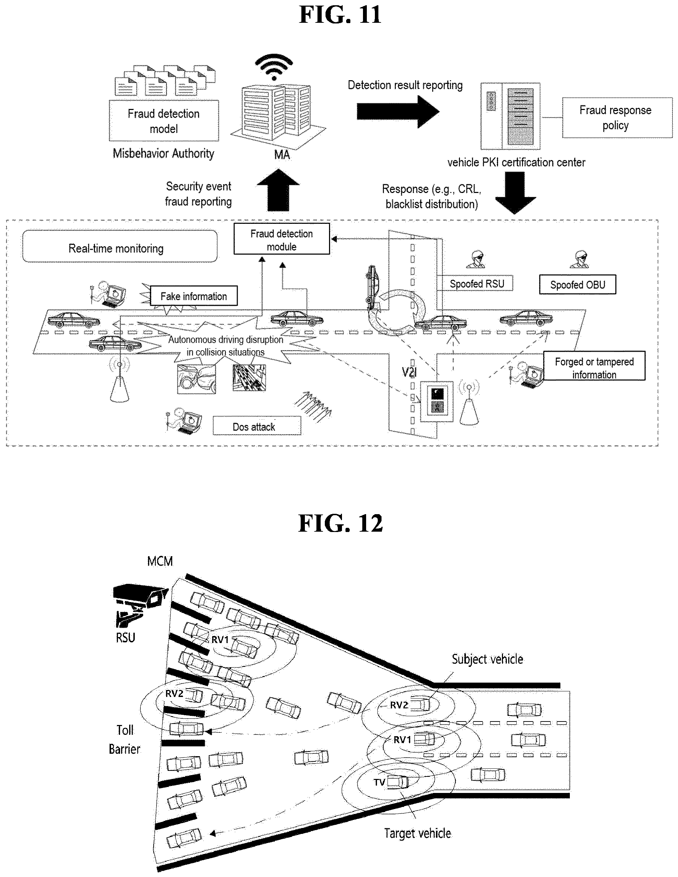

FIG. 11 illustrates a conceptual diagram of infrastructure security monitoring for each C-ITS component.

When comparing the similarity of numerical data values of detected object information, the comparison and determination are made using the percent difference between two values.

If the comparison values fall within the acceptable error margin, it is determined that detection is complete, and the maneuver negotiation state proceeds. If the error margin is exceeded, it may be determined whether to stop the maneuver driving based on V2X message information, remote sensing object detection results, numerical values, and percent difference used in the comparison. When the maneuver driving stops, the analysis results may be reported to the vehicle with the discrepancy between the sensing and V2X message to the MA.

If the analysis result indicates that, while it is not misbehavior, the object detection and positioning error is deemed too large to proceed with maneuver driving, the vehicle with the discrepancy may be reported with the details of the discrepancy between the sensing and V2X message. Additionally, during coordination driving with other vehicles, potential obstacles may be reported to the vehicle with the discrepancy.

The MA is a component of a V2X security certification system based on public key infrastructure (PKI) that processes misbehavior reports by identifying potential misbehavior devices. The MA is applied in conjunction with a cooperative intelligent transport system (C-ITS) that is managed and operated by local governments or government-affiliated organizations. In this case, communication between the vehicle and the MA may take some time, and if a vehicle exhibiting an abnormal behavior (e.g., signature forgery, providing false information) is reported by others, the MA may perform a process of revoking the certificate of the vehicle. Therefore, reporting to the MA should be performed with careful consideration of the certainty of misbehavior and the potential threat of discrepancy in the detected information within the traffic environment.

The percent difference is based on a value obtained by dividing the absolute difference by the average, and the order of the two values in the calculation does not matter in the percent difference.

Equation 1 shows a formula for calculating the percent difference.

[Equation 1]

$$\% \text{ difference} = \frac{|value1 - value2|}{(value1+value2)/2} \times 100\%$$

If an error occurs during the process of comparing the classification detection results and the message data fields, an additional object recognition re-detection opportunity may be provided to allow for a new comparison.

However, whenever an error occurs, if an additional object recognition re-detection opportunity is provided, it may lead to delays, and thus, the additional object recognition re-detection opportunity should be taken into account in the overall processing time. The object detection time varies greatly depending on the number of detection targets, the applied object detection algorithm, and the hardware performance. However, referring to the evaluation target detection time set by research projects related to moving object detection (e.g., the urban road autonomous cooperative driving safety and infrastructure research project, the development of intersection moving object information collection technology/moving object detection performance evaluation), the object detection time is 200 milliseconds. Accordingly, if a few re-detection attempts are allowed, delays may range from several hundred milliseconds to several seconds.

In this method, only one re-detection attempt is allowed for each of the 1) position and appearance and 2) movement information detection results during the comparison and analysis process with the message data fields. Thus, by allowing a maximum of two re-detection attempts, the delays caused by the analysis process and result errors are minimized. However, the maximum allowable re-detection attempts may vary depending on the delay tolerance values permitted by the given system. In scenarios where improving detection accuracy is more important than real-time detection result transmission, the number of re-detection attempts may be increased as long as the number of re-detection attempts remains within the maximum allowable delay.

Object detection methods may include various types of sensors or detection techniques including video. The video object detection, which will be detailed below, is just one example of many object detection methods. The methods proposed in the present disclosure may be similarly applied when other sensors are used for detection.

3.1 When vehicle recognition for BSM is detected

To determine the detection based on the physical data field contents of a V2X BSM and the video object recognition analysis results of a vehicle transmitting the message, the conditions in Table 7 need to be met in sequence. Table 7 shows the conditions/procedures for target recognition through the BSM and video object detection in the awareness state.

The following error value(s) are an example aimed at minimizing errors in determining tampering or forgery of a V2X message from a transmitting vehicle. These values may be determined experimentally, predetermined, or transmitted through physical channels or higher layer messages.

[Table 7]

| 1 | A bounding box needs to be present at a pixel location within a video frame that corresponds to DE_Latitude/-DE_Longitude. |
|---|---|
| 2 | The bounding box at the pixel location within the video frame corresponding to DE_Latitude/DE_Longitude needs to be classified as a "vehicle." |
| 3 | The width and length of an object are estimated from the bounding box, and the percent difference between the values and the DE_VehicleWidth/DE_VehicleLength values needs to be 10% or less. |
| 4 | The percent difference between the movement direction of the bounding box and the DE_Heading angle value needs to be 5% or less. |
| 5 | The percent difference between the speed of the bounding box and the DE_Speed movement speed value needs to be 5% or less. |
| 6 | The maneuver negotiation state proceeds. |

3.2 When vehicle recognition for BSM is not detected

To determine the physical data field contents of a V2X BSM and the video object recognition analysis result of a vehicle transmitting the message as misbehavior detection (MBD), the conditions in Table 8 need to be checked in sequence, and it should be verified whether errors occur even after re-detection. Table 8 shows the conditions/procedures for target recognition failure through the BSM and video object detection in the awareness state.

The following error value(s) are an example aimed at minimizing errors in determining tampering or forgery of a V2X message from a transmitting vehicle. These values may be determined experimentally, predetermined, or transmitted through physical channels or higher layer messages.

[Table 8]

| 1 | A bounding box does not exist at a pixel location within a video frame corresponding to DE_Latitude/-DE_Longitude. |
|---|---|
| 2 | The bounding box at the pixel location within the video frame corresponding to DE_Latitude/DE_Longitude is not classified as a "vehicle." |
| 3 | The width and length of an object are estimated from the bounding box, and the percent difference between these values and the DE_VehicleWidth/DE_VehicleLength values exceeds 10%. |
| 4 | The percent difference between the movement direction of the bounding box and the DE_Heading angle value exceeds 5%. |
| 5 | The percent difference between the speed of the bounding box and the DE_Speed movement speed value exceeds 5%. |
| 6 | If there is one or more "No" among conditions 1, 2, and 3, the position and appearance information detection loop is re-executed once. If "No" occurs again, depending on whether maneuver driving is capable of being performed (minor error level), the maneuver negotiation state proceeds or the maneuver driving stops. If the maneuver driving stops, 6-1 and 6-2 are performed. |
| 6-1 | If the maneuver driving is deemed unfeasible (no MB) based on object detection and positioning errors, a misbehavior report is transmitted with the following information to cooperating vehicles:<br>1-1) BSM message<br>DE_Latitude, DE_Longitude, DE_VehicleWidth, DE_VehicleLength, DE_Heading<br>1-2) Object detection result data<br>Presence of bounding box in condition 1, classification result in condition 2, Percent difference in condition 3<br>1-3) Notification text<br>"Occurrence of V2X system detection error, potential obstacle in cooperative driving" |
| 6-2 | When misbehavior is determined, a misbehavior report is transmitted to the MA with the following information:<br>1-1) BSM message |
| | DE_Latitude, DE_Longitude, DE_VehicleWidth, DE_VehicleLength, DE_Heading<br>1-2) Object detection result data<br>Presence of bounding box in condition 1, Classification result in condition 2, Percent difference in Condition 3 |
| 7 | If there is one or more "No" among conditions 4 and 5, the movement information detection loop is executed once. If "No" occurs again, depending on whether maneuver driving is capable of being performed (minor error level), the maneuver negotiation state proceeds or the maneuver driving stops. If the maneuver driving stops, 7-1 and 7-2 are performed. |
| 7-1 | If the maneuver driving is deemed unfeasible (no MB) based on object detection and positioning errors, a misbehavior report is transmitted with the following information to cooperating vehicles:<br>1-1) BSM message:<br>DE_Latitude, DE_Longitude, DE_VehicleWidth, DE_VehicleLength, DE_Heading, DE_Speed<br>1-2) Object detection result data<br>Presence of bounding box in Condition 1, Classification result in Condition 2, Percent difference in Conditions 3, 4, and 5<br>1-3) Notification text<br>"Occurrence of V2X system detection error, potential obstacle in cooperative driving" |

(continued)

| 7-2 | When misbehavior is determined, a misbehavior report is transmitted to the MA with the following information:<br>1-1) BSM message<br>DE_Latitude, DE_Longitude, DE_VehicleWidth, DE_VehicleLength, DE_Heading<br>1-2) Object detection result data<br>Presence of bounding box in condition 1, Classification result in condition 2, Percent difference in Conditions 3, 4, and 5 |
| --- | --- |

### 3.3 When vehicle recognition for SDSM is detected

To determine the detection based on the physical data field contents of a V2X SDSM and the video object recognition analysis results of a vehicle transmitting the message, the conditions in Table 9 needs to be met in sequence. Table 9 outlines the conditions/procedures for target recognition through the SDSM and video object detection in the awareness state.

The following error value(s) are an example aimed at minimizing errors in determining tampering or forgery of a V2X message from a transmitting vehicle. These values may be determined experimentally, predetermined, or transmitted through physical channels or higher layer messages.

[Table 9]

| 1 | A bounding box needs to be present at a pixel location within a video frame corresponding to DE_Latitude + DE_ObjectDistance (offsetX) and DE_Longitude + DE_ObjectDistance (offsetY). |
| --- | --- |
| 2 | The bounding box at the pixel location within the video frame corresponding to DE_Latitude + DE_ObjectDistance (offsetX) and DE_Longitude + DE_ObjectDistance (offsetY) needs to be classified as DE_ObjectType. |
| 3 | The percent difference between the movement direction of the bounding box and the DE_Heading angle value needs to be 5% or less. |
| 4 | The maneuver negotiation state proceeds. |

### 3.4 When vehicle recognition for SDSM is not detected

To determine the physical data field contents of a V2X SDSM and the video object recognition analysis result of a vehicle transmitting the message as MBD, the conditions in Table 10 need to be checked in sequence, and it should be verified whether errors occur even after re-detection. Table 10 shows the conditions/procedures for target recognition failure through the SDSM and video object detection in the awareness state.

The following error value(s) are an example aimed at minimizing errors in determining tampering or forgery of a V2X message from a transmitting vehicle. These values may be determined experimentally, predetermined, or transmitted through physical channels or higher layer messages.

[Table 10]

| 1 | A bounding box does not exist at a pixel location within a video frame corresponding to DE_Latitude + DE_ObjectDistance (offsetX) and DE_Longitude + DE_ObjectDistance (offsetY). |
| --- | --- |
| 2 | The bounding box at the pixel location within the video frame corresponding to DE_Latitude + DE_ObjectDistance (offsetX) and DE_Longitude+ DE_ObjectDistance (offsetY) is not classified as DE_ObjectType. |
| 3 | The percent difference between the movement direction of the bounding box and the DE_Heading angle value exceeds 5%. |
| 4 | If there is one or more "No" among conditions 1 and 2, the position and appearance information detection loop is re-executed once. If "No" occurs again, depending on whether maneuver driving is capable of being performed (minor error level), the maneuver negotiation state proceeds or the maneuver driving stops. If the maneuver driving stops, 4-1 and 4-2 are performed. |
| 4-1 | If the maneuver driving is deemed unfeasible (no MB) based on object detection and positioning errors, a misbehavior report is transmitted with the following information to cooperating vehicles:<br>1-1) SDSM message |

(continued)

| | | |
|---|---|---|
| | | DE_Latitude, DE_Longitude, DE_ObjectType, DE_ObjectDistance (offsetX), DE_ObjectDistance (offsetY)<br>1-2) Object detection result data<br>Presence of bounding box in condition 1<br>Classification result in condition 2<br>1-3) Notification text<br>"Occurrence of V2X system detection error, potential obstacle in cooperative driving" |
| | 4-2 | When misbehavior is determined, a misbehavior report is transmitted to the MA with the following information:<br>1-1) SDSM message<br>DE_Latitude, DE_Longitude, DE_ObjectType, DE_ObjectDistance (offsetX), DE_ObjectDistance (offsetY)<br>1-2) Object detection result data<br>Presence of bounding box in condition 1<br>Classification result in condition 2 |
| | 5 | If condition 3 is "No," the movement information detection loop is re-executed once. If "No" occurs again, depending on whether maneuver driving is capable of being performed (minor error level), the maneuver negotiation state proceeds or the maneuver driving stops. If the maneuver driving stops, 5-1 and 5-2 are performed. |
| | 5-1 | If the maneuver driving is deemed unfeasible (no MB) based on object detection and positioning errors, a misbehavior report is transmitted with the following information to cooperating vehicles:<br>1-1) SDSM message<br>DE_Latitude, DE_Longitude, DE_ObjectType, DE_Heading, DE_ObjectDistance (offsetX), DE_ObjectDistance (offsetY)<br>1-2) Object detection result data<br>Presence of bounding box in condition 1, Classification result in condition 2, Percent difference in condition 3<br>1-3) Notification text<br>"Occurrence of V2X system detection error, potential obstacle in cooperative driving" |
| | 5-2 | When misbehavior is determined, a misbehavior report is transmitted to the MA with the following information:<br>1-1) SDSM message |
| | | DE_Latitude, DE_Longitude, DE_ObjectType, DE_Heading, DE_ObjectDistance (offsetX), DE_ObjectDistance (offsetY)<br>1-2) Object detection result data:<br>Presence of bounding box in condition 1, Classification result in condition 2, Percent difference in condition 3 |

FIG. 12 is a diagram illustrating control for selecting the shortest gate for vehicles passing through a toll gate.

Assuming that maneuver driving for the benefit or public interest of multiple V2X-enabled vehicles (e.g., control for selecting the shortest gate for vehicles passing through a toll gate, enabling quick passage through accident zones, etc.) is proposed and performed by an RSU or a server system linked to the RSU, if a V2X message received from vehicles for performing the MSCS include misbehavior elements and the reliability of the vehicle information is not guaranteed, there is a possibility of failure in achieving the maneuver driving. Therefore, the reliability of V2X messages and actual data from transmitting vehicles may be verified using the methods proposed in the present disclosure.

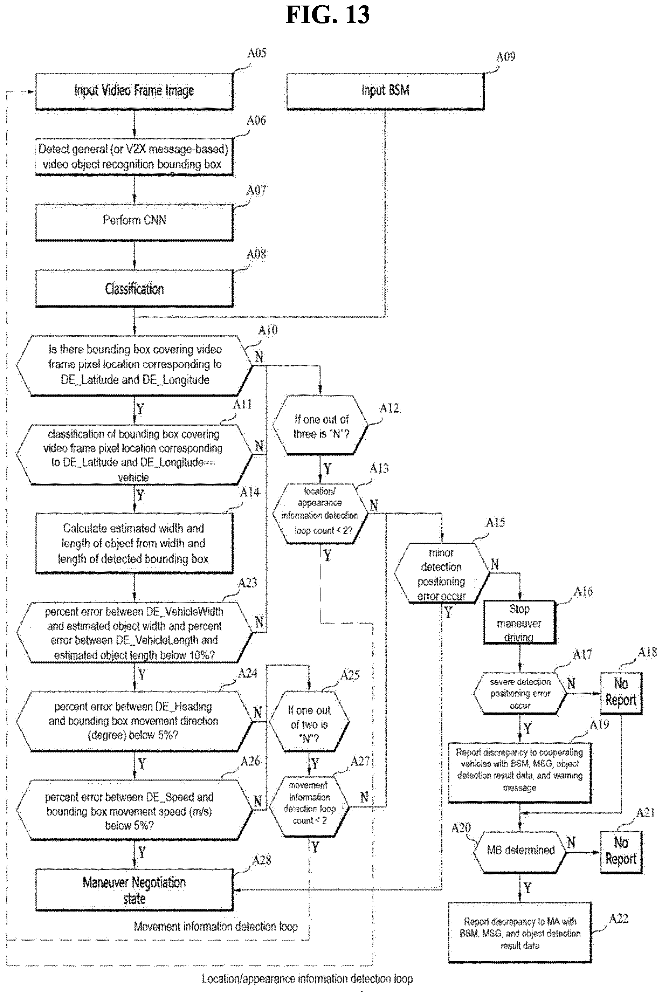

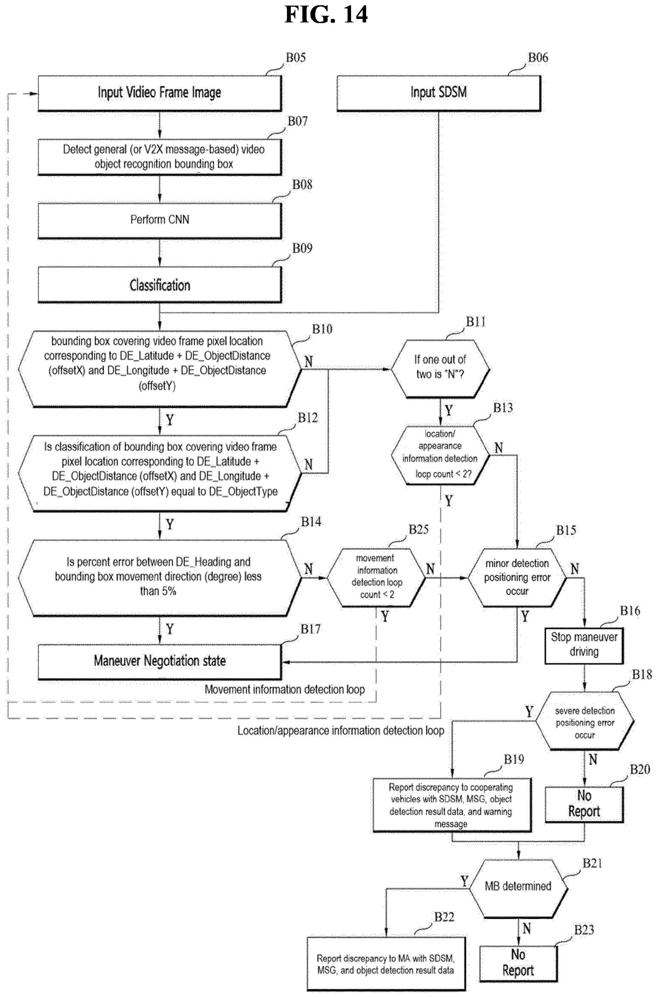

FIGS. 13 and 14 illustrate report flows for fusion, comparison, and determination of video sensing object detection results and a V2X message such as a BSM and an SDSM along with information discrepancies in an initial maneuver driving environment.

First, a BSM detection method will be described with reference to FIG. 13. A device may receive an image input (A05). The device may perform bounding box detection for object recognition (A06) and apply a convolutional neural network (CNN) (A07) to classify an object (A08)

If there is a bounding box covering the position corresponding to DE_Latitude and DE_Longitude and the classification is "vehicle," the device may estimate the width and length of the object from the width and length of the bounding box (A14).

If the estimation error for the width and length of the object is within 10% (A23, Y), the device checks whether the percent difference between DE_Heading and the bounding box movement direction is within 5% (A24) and whether the percent difference between DE_Speed and bounding box movement speed is within 5% (A26).

If the percent difference between DE_Heading and the bounding box movement direction is within 5% (A24, Y), and if the percent difference between DE_Speed and the bounding box movement speed is within 5% (A26, Y), the device proceeds to the maneuver negotiation state (A28).

If the percent difference between the DE_Heading and the bounding box movement direction exceeds 5% (A24, N) or if the percent difference between the DE_Speed and the bounding box movement speed exceeds 5% (A26, N), the device checks whether the number of movement information detection loop attempts is less than a threshold (e.g., 2 attempts) (A27). If the number of movement information detection loop attempts exceeds the threshold, the device then determines whether the discrepancy is a minor detection or positioning error (A15).

If there is no bounding box covering the position corresponding to DE_Latitude and DE_Longitude (A10, N), the classification is not "vehicle" (A11, N), or the estimation error for the width and length of the object exceeds 10% (A23, N), the device checks whether the number of position/appearance information detection loop attempts is less than a threshold (e.g., 2 attempts) (A13). If the number of position/appearance information detection loop attempts exceeds the threshold, the device then determines whether the discrepancy is a minor detection or positioning error (A15).

If the discrepancy is a minor detection or positioning error, the device proceeds to the maneuver negotiation state (A28).

If the discrepancy is not a minor detection or positioning error, the device stops the maneuver driving (A16) and determines whether the discrepancy is a severe detection or positioning error (A17).

If the discrepancy is a severe detection or positioning error, the details of the discrepancy may be reported to cooperating vehicles. In this case, a BSM, a message (MSG), object detection result data, and an alert message may be provided (A19).

The device determines whether the discrepancy is misbehavior (A20). If the discrepancy is misbehavior, the details of the discrepancy may be reported to the MA. In this case, a BSM, an MSG, object detection result data, and an alert message may be provided (A22).

FIG. 14 illustrates a flow of a method of detecting an SDSM according to an embodiment.

Referring to FIG. 14, a device may receive an image (B05). The device may perform bounding box detection for object recognition (B07) and apply a CNN (B08) to classify an object (B09).

The device receives an SDSM (B06).

The device determines whether there is a bounding box that covers the position corresponding to DE_Latitude + offset X and DE_Longitude + offset Y (B10).

If the bounding box that covers the position corresponding to DE_Latitude + offset X and DE_Longitude + offset Y exists and the classification result matches a specified object type, the device then determines whether the percent difference between the movement direction of the bounding box and the DE_Heading angle value is 5% or less (B14).

If the percent difference between the movement direction of the bounding box and the DE_Heading angle value is 5% or less, the device proceeds to the maneuver negotiation state (B17).

If the percent difference between the movement direction of the bounding box and the DE_Heading angle value exceeds 5%, the device checks whether the number of movement information detection loop attempts is less than a threshold (e.g., 2 attempts) (B15). If the number of movement information detection loop attempts exceeds the threshold, the device then determines whether the discrepancy is a minor detection or positioning error (B15).

If there is no bounding box that covers the position corresponding to DE_Latitude + offset X and DE_Longitude + offset Y or if the classification result does not match a specified object type, the device checks whether the number of position/appearance information detection loop attempts is less than a threshold (e.g., 2 attempts) (B13). If the number of position/appearance information detection loop attempts exceeds the threshold, the device then determines whether the discrepancy is a minor detection or positioning error (B15).

If the discrepancy is a minor detection or positioning error, the device proceeds to the maneuver negotiation state (B17).

If the discrepancy is not a minor detection or positioning error, the device stops the maneuver driving (B16) and determines whether the discrepancy is a severe detection or positioning error (B18).

If the discrepancy is a severe detection or positioning error, the details of the discrepancy may be reported to cooperating vehicles. In this case, a BSM, an MSG, object detection result data, and an alert message may be provided (B19).

The device determines whether the discrepancy is misbehavior (B21). If the discrepancy is misbehavior, the details of the discrepancy may be reported to the MA. In this case, a BSM, an MSG, object detection result data, and an alert message may be provided (B22).

As described above, for example, position, appearance, and movement information are detected from sensor data that allows a lead entity to recognize participating vehicle objects based on the maneuver driving computing system.

Based on fusion and comparison with a V2X message transmitted by an object, the severity of discrepancies may be assessed according to the similarity/match criteria proposed in the present disclosure, thereby determining whether maneuver driving is capable of being performed.

For example, if maneuver driving is determined to be stopped based on the determination that an error has occurred at a level that makes cooperative driving unfeasible although it is not misbehavior, discrepancy details including V2X message information used to compare a V2X message with sensing information, object detection results obtained through remote sensing, values, and percent error information may be provided to cooperative driving target vehicles. Similarly, if the lead entity determines that the information discrepancy clearly indicates misbehavior, the lead entity may also report the information to the MA.

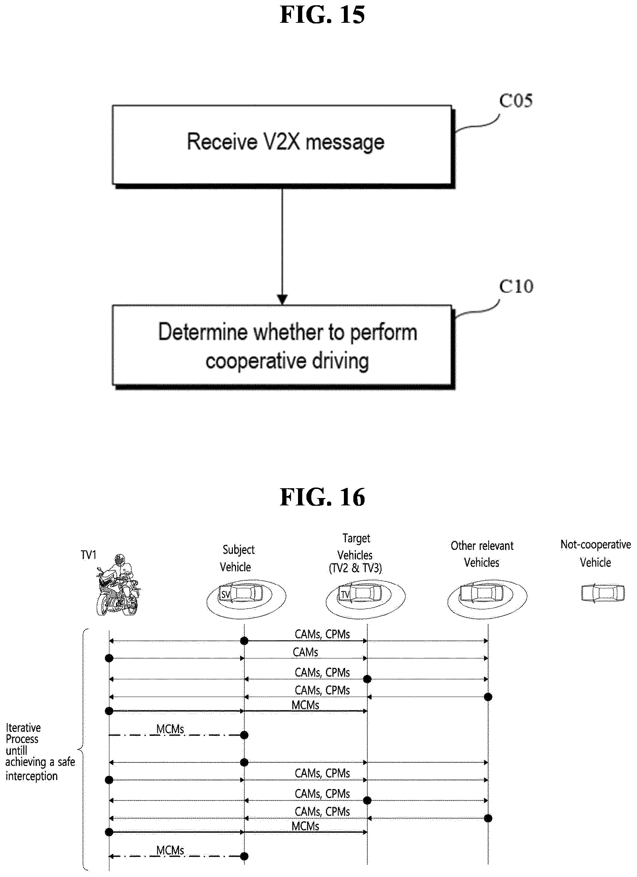

FIG. 15 illustrates a flow of a method of transmitting and receiving signals for maneuver driving according to an embodiment of the present disclosure.

Referring to FIG. 15, a first device may receive a V2X message related to an MSCS from a second device (C05).

The first device may determine whether to perform cooperative driving with the second device based on the V2X message (C10).

The first device may determine to perform the cooperative driving with the second device based on that a reliability assessment of the V2X message is more than or equal to a threshold.

The reliability assessment may be performed based on a correlation between first object information included in the V2X message and second object information obtained by a sensor equipped in the first device.

A maneuver negotiation procedure with the second device may be performed based on that the reliability assessment of the V2X message is more than or equal to the threshold.

The first device may perform the reliability assessment based on results of comparing at least one of location information, appearance information, or movement information included in the first object information with at least one of location information, appearance information, or movement information included in the second object information, respectively.

The V2X message may be related to at least one of a BSM, an SDSM, or an MSCM.

The first device may stop the maneuver negotiation procedure with the second device based on that the reliability assessment of the V2X message is less than the threshold.

The first device may further determine misbehavior of the second device based on that the reliability assessment of the V2X message is less than the threshold.

The first device may transmit a signal to an MA device to report the misbehavior of the second device.

The first device may identify the second device.

### Method for VRU and Vehicle to Display and Recognize Maneuver Driving Support for VRU and vehicle

Similar to SAE J3186, according to the European Telecommunications Standards Institute (ETSI) TR 103 578, currently being developed by ETSI, maneuver driving use cases and requirements specify that, when a maneuver driving entity recognizes participating vehicles/environments, the maneuver driving entity needs to receive a cooperative awareness message (CAM) or a collective perception message (CPM), which are V2X messages developed and distributed by ETSI, to select vehicles and determine surroundings. Support for such messages by objects capable of V2X needs to be included as an essential element of maneuver driving.

FIG. 16 illustrates an information flow for normative maneuver cooperation driving in V2V specified in ETSI TR 103 578.

In this way, when recognizing vehicles and environments participating in maneuver driving, a process of recognizing the maneuver driving participants and environments is performed based on V2X messages (e.g., BSM, SDSM, CAM, CPM, etc.). There is no detailed verification process beyond information confirmed to proceed to the maneuver request negotiation state, or the process relies on the determination of an entity leading the maneuver driving.

Additionally, the current maneuver driving standard (SAE J3186) is based solely on V2V communication. However, according to recent trends in implementation of 5G C-V2X use cases, interactive VRU crossing, which considers interaction scenarios between vehicles and VRUs, is introduced in 5GAA C-V2X Use Cases and Service Level Requirements Volume II. The use cases involve maneuver driving through V2X message communication between vehicles and VRUs, and the use cases are expected to be commercially viable around 2027.

Table 11 shows the interactive VRU crossing described in 5GAA C-V2X Use Cases and Service Level Requirements Volume II.

[Table 11]

| Use Case Name | Interactive VRU Crossing |
|---|---|
| User story #1 | A vulnerable road user (e.g. pedestrian, cyclist) expresses intent to cross a road. Vehicles approaching the area in which the VRU intends to cross receive the message and send an acknowledgment when they have begun to slow down to allow the VRU to cross safely. Upon receiving this acknowledgment from the vehicles, the VRU may cross the street.<br>Upon reaching the other side of the street, the VRU may send another message to the vehicles confirming that he/she has safely crossed. |
| Category | VRU safety. |
| Road Environment | Urban. |
| Short Description | • A VRU is preparing to cross the street,<br><br>• After signalling this intent, nearby vehicles send an acknowledgement to reassure the VRU that it is safe to cross.<br>• As the VRU is crossing, communicating continues with stopped vehicles<br>  ∘ The VRU tells vehicles when it has cleared the zone in front of them so that they may continue driving.<br>The VRU double checks with vehicles just before moving in front of them that they are clear to move forward. |
| Actors | Vehicle(s), vulnerable road user. |
| Vehicle Roles | Vulnerable road user and remote vehicles. |
| Road/Roadside infrastructure Roles | Not applicable. |

According to SAE J2945/9 (Vulnerable Road User Safety Message Minimum Performance Requirements) which has been recently developed, a new field called eventLowBattery has been added to the VehicleEventFlag field of a PSM. If the battery level in the VRU device falls below a threshold such as 25%, the flag may be set to 1 to indicate a low battery status. This type of detailed information may gradually be used for various purposes in VRU-vehicle interaction-related use cases.

According to the information flow in the protocol of the maneuver driving standard (SAE J3186) or technical requirements definition document (ETSI TR 103 578), a maneuver driving entity needs to analyze periodically transmitted V2X messages and identify vehicles, VRUs, and surrounding environments for participation in maneuver driving by determining a lead entity. In this process, information on whether the identified entities support maneuver driving and information on the intentions thereof is currently not included in V2X messages (e.g., BSM, PSM, SDSM, CAM, CPM, VAM, etc.).

Therefore, for the maneuver driving entity to know that the identified entities are incapable of supporting maneuver driving or intentions to refuse participation, the information may only be obtained through the exchange of an MSCM (maneuver sharing and coordination message) or a maneuver coordination message (MCM).

Table 12 shows MSCM Types in the J3186 standard.

[Table 12]

| MSCM type | Recommended transport type |
|---|---|
| Maneuver Intent (mSCMType = 0) | Groupcast, Broadcast |
| Maneuver Request (mSCMType = 1) | Groupcast, Broadcast |
| Maneuver Response (mSCMType = 2) | Unicast, Groupcast, Broadcast |
| Maneuver Reservation (mSCMType = 3) | Groupcast, Broadcast |
| HV Maneuver Cancellation (mSCMType = 4) | Groupcast, Broadcast |
| RV Maneuver Cancellation Request (mSCMType = 5) | Unicast, Groupcast, Broadcast |

(continued)

| MSCM type | Recommended transport type |
|---|---|
| Emergency Maneuver Reservation = 6) | Groupcast, Broadcast |
| Maneuver Execution Status (mSCMType = 7) | Groupcast, Broadcast |

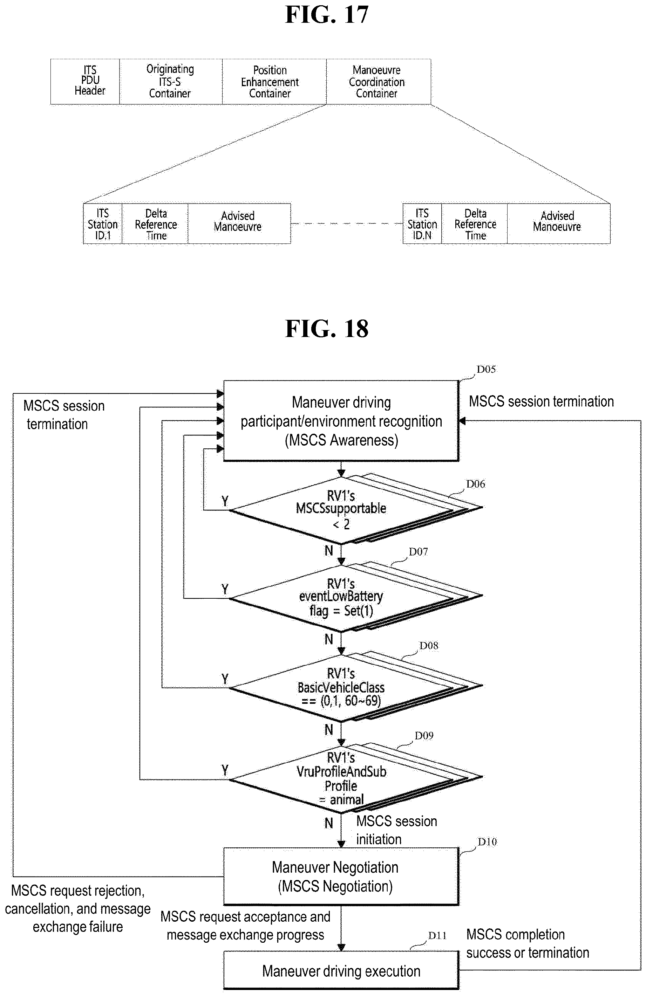

FIG. 17 illustrates the basic structure of an MCM currently under discussion in ETSI TR 103 578.

Such a structure may cause the maneuver driving entity to transmit unnecessary messages to multiple cooperating entities whose support for maneuver driving is incapable of being specified. When multiple maneuver driving entities are present, the structure may increase message traffic.

If the maneuver driving entity is capable of detecting detailed status information, including information on whether support for maneuver driving is available, from V2X messages received during the maneuver participant/environment recognition state (e.g., MSCS awareness) and incorporating the information into selecting maneuver participants, assessing progress, and establishing driving strategies before the maneuver driving entity starts the maneuver negotiation, this may help reduce unnecessary MSCM transmission and traffic.

Hereinafter, a method by which in the maneuver driving participant/environment recognition state (MSCS awareness), a maneuver lead entity (e.g., vehicle, RSU, etc.) detects direct maneuver driving support information and indirect status information indicated by V2X message fields transmitted from vehicles capable of supporting V2X capabilities and VRU devices and then selects or excludes vehicles as maneuver driving participants will be described.

A. Direct indication and detection method for maneuver driving support

Before the maneuver driving entity (e.g., vehicle or RSU) starts the maneuver negotiation, surrounding vehicles or VRUs with V2X capabilities may explicitly indicate (announce) whether to support the MSCS in V2X messages. If the maneuver driving entity detects vehicles (discovery) and the vehicles are marked as unsupported, the vehicles may be excluded from maneuver driving participation.

In this embodiment, the following DE structure is proposed to explicitly indicate whether to support the MSCS in a V2X message. The DE may be referenced and used in relevant data frames in any V2X messages transmitted in similar forms and for similar purposes, including a BSM, SDSM, PSM, CAM, CPM, and VAM, etc. In the proposed DE structure, elements such as variable names, data types, required bit size, status values, format, referenced messages, data frames, and data elements may be modified or adjusted according to the system environment, conditions, and requirements to be applied if the requirements of this embodiment are met.

Table 13 shows DE_MSCSsupportable.

[Table 13]

| Data Element: DE_MSCSsupportable |
|---|
| MSCSsupportable ::= ENUMERATED {<br>unavailable (0), -- Vehicle not supported with J3186(Application Protocol and Requirements for Maneuver Sharing and Coordinating Service)<br>off (1), -- Vehicle's Maneuver Sharing and Coordinating Service function is off<br>on (2) -- Vehicle's Maneuver Sharing and Coordinating Service function is on (applied) } |

For example, in the case of representative V2X messages in SAE and ETSI such as a BSM and CAM, DE_MSCSsupportable may be structured as shown in Tables 14 and 15. Table 14 shows the position of DE_MSCSsupportable within the BSM, while Table 15 shows the position of DE_MSCSsupportable within the CAM.

[Table 14]

| BSMpartIIExtension PARTII-EXT-ID-AND-TYPE :: | VehicleSafetyExtensions | | |
|---|---|---|---|
| | SpecialVehicleExtensions | | |
| | SupplementalVehicleExtensions | BasicVehicleClass | |
| | | = INTEGER (0..255)<br>unknownVehicleClass<br>BasicVehicleClass ::= 0<br>-- Not Equipped, Not known or<br>unavailable<br>specialVehicleClass<br>BasicVehicleClass ::= 1<br>-- Special use | |
| | | VehicleClassification<br>= DF_VehicleClassification | |
| | | VehicleData<br>= DF_VehicleData | Height<br>= VehicleHeight ::= INTEGER (0..127)<br>    -- the height of the vehicle<br>    -- LSB units of 5 cm, range to 6.35 meters |
| | | | Bumpers = DF_BumperHeights |
| | | | Mass<br>= VehicleMass ::= INTEGER (0..255)<br>    -- Values 000 to 080 in steps of 50kg<br>    -- Values 081 to 200 in steps of 500kg<br>... ...<br>    -- 181 represents  54500 kg<br>    -- 253 represents 170000 kg |
| | | | trailerWeight<br>= TrailerWeight ::= INTEGER (0..64255) |
| | | | **mscsSupportable**<br>**= MSCSsupportable ::= ENUMERATED {**<br>**-- 0 : unavailable**<br>**-- 1 : Off**<br>**-- 2 : On**<br>**}** |

[Table 15]

```
CAM          ITS PDU header
             Basic Container
             High Frequency Container
             Low Frequency Container =            VehicleRole
             BasicVehicleContainerLowFrequency
                                                  ExteriorLights

                                                  PathHistory

                                                  mscsSupportable
                                                  =
                                                  MSCSsupportable ::
                                                  = ENUMERATED {
                                                  -- 0 : unavailable
                                                  -- 1 : Off
                                                  -- 2 : On
                                                  }
             Special vehicle Container
```

B. Indirect indication and detection method for maneuver driving support

Even if surrounding vehicles or VRUs with V2X capabilities do not explicitly indicate whether to support the MSCS in V2X messages, the maneuver driving entity may detect status information in a message and individually determines the support status (discovery). The maneuver driving entity should be able to check the detailed status information on an object and exclude the object from participation if maneuver driving participation appears unnecessary or unfeasible. Additionally, one or more V2X messages and DEs (e.g., Data Frame, Data Element) may be required for the assessment.

The criteria and targets for the "unnecessary or unfeasible maneuver driving participation" conditions may be freely modified or adjusted if the requirements proposed in this embodiment are met. For example, in the cases shown in Table 16, objects should be determined to be excluded from maneuver driving participation.

Table 16 shows configurations of V2X message field values that indicate a need for exclusion from maneuver driving participation.

[Table 16]

| Message | Data Component | Value | Reason for Exclusion |
|---|---|---|---|
| PSM | DE_EventFlags | eventLowBattery flag | Communication-related functions with a higher priority than maneuver driving are required in the low battery status. |
| | VehicleEventFlags ::= BIT STRING { eventHazardLights (0), eventABSactivated (1), eventTractionControlLoss (2), eventStabilityControlactivated (3), eventStabilityLoss 4), eventHardBraking (5), eventLowBattery (6), eventEmergencyCall (7), } (SIZE (7, ...)) | = if Set(1) | |

(continued)

|  | Messag e | Data Component | Value | Reason for Exclusion |
|---|---|---|---|---|
| VAM | VruProfileAndSubProfile ::= CHOICE {pedestrian VruSubProfilePedestrian, bicyclist VruSubProfileBicyclist, motorcyclist VruSubProfileMotorcyclist, | VruProfileAndSubPro file = if animal | Types of VRUs expected to be unsuitable for maneuver driv- ing as |
|  |  | animal VruSubProfileAnimal, ... } |  | cooperation tar- gets |
| BSM | DE_BasicVehicleClass BasicVehicleClass ::= INTEGER (0..255) unknownVehicleClass BasicVehicleClass ::= 0 -- Not Equipped, Not known or unavailable<br><br>specialVehicleClass BasicVehicleClass ::= 1<br><br>-- Special use<br><br>-- Emergency Vehicle Types emergency-TypeUnknown BasicVehicleClass ::= 60default type emergency-TypeOther BasicVehicleClass ::= 61includes federal users emergency-Fire-Light-Vehicle BasicVehicleClass ::= 62 emergency-Fire-Heavy-Vehicle BasicVehicleClass ::= 63 emergency-Fire-Paramedic-Vehicle BasicVehicle- Class ::= 64 emergency-Fire-Ambulance-Vehicle BasicVehicle- Class ::= 65 emergency-Police-Light-Vehicle BasicVehicleClass ::= 66 emergency-Police-Heavy-Vehicle BasicVehicleClass ::= 67 emergency-Other-Responder BasicVehicleClass ::= 68 emergency-Other-Ambulance BasicVehicleClass ::= 69 | Basic VehicleClass = if unknown vehicle(0), special vehicle(1), emergency vehicle types(60-69) | Vehicle classes expected to be unsuitable as cooperative vehicles (remote vehicle) for maneuver driv- ing |
| CAM | DE_VehicleRole VehicleRole ::= ENUMERATED {default(0), publicTransport(1), specialTransport(2), dangerousGoods(3), road- Work(4), rescue(5), emergency(6), safetyCar(7), agriculture(8), commercial(9), military(10), roadOperator(11), taxi(12), reserved1(13), reserved2(14), reserved3(15)} | VehicleRole = if emergency(6) | Types of vehicles expected to be unsuitable as co- operative vehi- cles (remote ve- hicle) for maneu- ver driving |
|  |  | CauseCodeType ::= INTEGER { ... rescueAndRecoveryWorkInProgress (15), ... } | CauseCodeType = if rescueAndRecovery WorkInProgress (15) |  |
|  |  | RescueAndRecoveryWorkInProgressSubCauseCode ::= INTEGER {unavailable(0), emergencyVehicles(1), res- cueHelicopterLanding(2), policeActivityOngoing(3), med- icalEmergencyOngoing(4), childAbductionInProgress(5)} (0..255) | RescueAndRecovery WorkInProgressSubC auseCode = if emergencyVehicles(1) |  |

Hereinabove, the method of selecting or excluding maneuver driving participants through direct or indirect V2X message indication and detection processes for supporting maneuver driving. To determine priorities of direct or indirect V2X message indications for supporting maneuver driving, V2X message status indication information (e.g., eventLow-Battery, BasicVehicleClass, VehicleRole, CauseCodeType, VruProfileAndSubProfile) should be provided in indirect maneuver driving support fields. The reason is that, even if direct maneuver driving support is indicated in field information, the information alone may be insufficient for determining participation feasibility.

The flow of the interactive VRU crossing use case, introduced in 5GAA XW6 White Paper Roadmap 2022, is shown in Table 17. In the operational scenario, the VRU may ensure safe movement by communicating with vehicles through V2X message field configurations.

Table 17 shows the use cases of interactive VRU crossing.

[Table 17]

| |
|---|
| ① A VRU approaches the roadside. |
| ② The VRU transmits a crossing intent message (e.g., MSCSsupportable = 2). |
| ③ An approaching vehicle receives the message and performs target classification. |
| ④ Upon determining that the vehicle is capable of accommodating the request, the vehicle confirms the VRU and notifies surrounding vehicles that the vehicle is stopping. |
| ⑤ Once the VRU receives sufficient confirmation that crossing is safe (which may vary depending on the number of lanes and the number of vehicles), the VRU starts crossing. |
| ⑥ During the crossing, the personal device of the VRU transmits information (e.g., PSM) for notifying the stopped vehicle of the crossing situation. |
| ⑦ After the VRU has safely crossed, the vehicle resumes driving. |

FIG. 18 illustrates a flow of an MSCS protocol state where maneuver driving support information is applied for determination.

Referring to FIG. 18, a device performs recognition of vehicles/environments participating in maneuver driving (D05). If MSCSsupportable of a first remote vehicle (RV) is more than or equal to 2 (D06, N), eventLowBatteryflag of the first RV is more than or equal to a threshold (D07, N), the vehicle class of the first RV corresponds to a preconfigured vehicle class suitable for cooperative maneuver driving (D08, N), and VruProfileAndSubProfile of first RV is appropriate as a cooperative VRU for maneuver driving (D09, N), the device may initiate an MSCS session and perform maneuver negotiation (D10).

Through the maneuver negotiation, the device may accept an MSCS request, proceed with message exchange, and execute the maneuver driving (D11).

As described above, according to an embodiment, during the maneuver driving participant/environment recognition state (MSCS awareness), a maneuver lead entity (e.g., vehicle, RSU, etc.) may detect direct maneuver driving support information and indirect status information indicated by V2X message fields transmitted from vehicles capable of supporting V2X capabilities and VRU devices and then select or exclude vehicles as maneuver driving participants.

If surrounding vehicles or VRUs with V2X capabilities may explicitly indicate whether to support the MSCS in V2X messages, the maneuver lead entity may exclude vehicles from maneuver driving participation.

Additionally, the maneuver lead entity may check status information unrelated to the MSCS within the V2X messages. If the maneuver driving participation is deemed unnecessary or unfeasible, the maneuver lead entity may exclude vehicles from the maneuver driving participation.

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

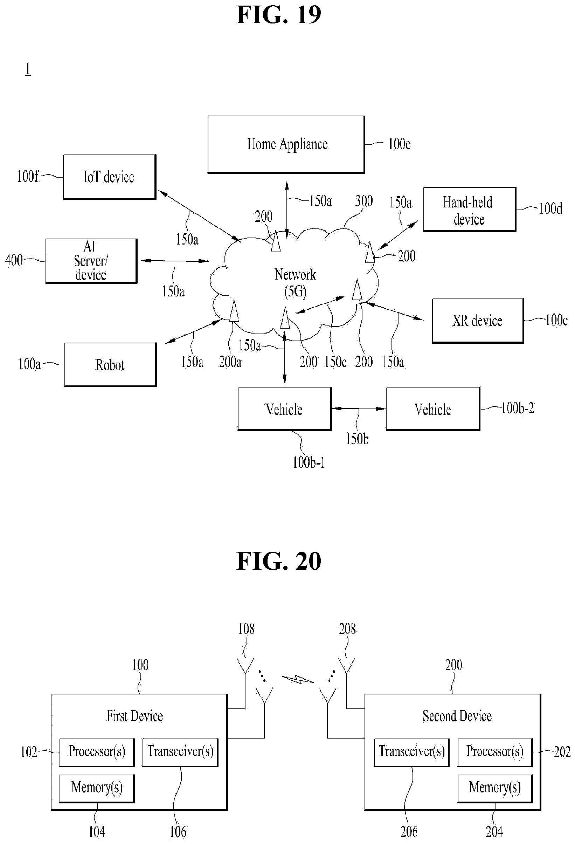

FIG. 19 illustrates a communication system applied to the present disclosure.

Referring to FIG. 19, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 20 illustrates a wireless device applicable to the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, a UE may include the processor(s) 102 connected to the RF transceiver and the memory(s) 104. The memory(s) 104 may include at least one program for performing operations related to the embodiments described above with reference to FIGS. 11 to 27.

Alternatively, a chipset including the processor(s) 102 and memory(s) 104 may be configured. The chipset may include: at least one processor; and at least one memory operably connected to the at least one processor and configured to, when executed, cause the at least one processor to perform operations.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

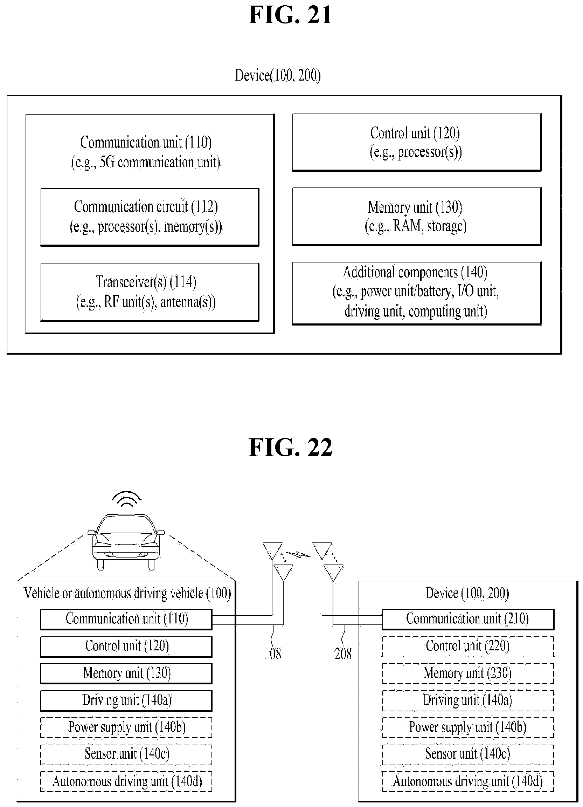

FIG. 21 illustrates another example of a wireless device applied to the present disclosure. The wireless device may be implemented in various forms according to a use-case/service (refer to FIG. 19)

Referring to FIG. 21, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 22 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The above-described embodiments of the present disclosure are applicable to various mobile communication systems.

**Claims**

1.   A method of performing maneuver driving by a first device in an intelligent transportation system (ITS), the method comprising:

     receiving a vehicle-to-everything (V2X) message related to a maneuver sharing and coordinating service (MSCS) from a second device; and
     determining whether to perform cooperative driving with the second device based on the V2X message,
     wherein the first device determines to perform the cooperative driving with the second device based on that a reliability assessment of the V2X message is more than or equal to a threshold, and
     wherein the reliability assessment is performed based on a correlation between first object information included in the V2X message and second object information obtained by a sensor equipped in the first device.

2.   The method of claim 1, wherein a maneuver negotiation procedure with the second device is performed based on that the reliability assessment of the V2X message is more than or equal to the threshold.

3.   The method of claim 1, wherein the first device performs the reliability assessment based on results of comparing at least one of location information, appearance information, or movement information included in the first object information with at least one of location information, appearance information, or movement information included in the second object information, respectively.

4.   The method of claim 1, wherein the V2X message is related to at least one of a basic safety message (BSM), a sensor data sharing message (SDSM), or a maneuver sharing and coordinating message (MSCM).

5.   The method of claim 1, wherein the first device stops a maneuver negotiation procedure with the second device based on that the reliability assessment of the V2X message is less than the threshold.

6.   The method of claim 1, further comprising determining, by the first device, misbehavior of the second device based on that the reliability assessment of the V2X message is less than the threshold.

7.   The method of claim 6, further comprising transmitting a signal for reporting the misbehavior of the second device to a misbehavior authority (MA) device.

8.   The method of claim 1, further comprising identifying the second device.

9.   A computer-readable recording medium having recorded thereon a program for performing the method of claim 1.

10.  A first device configured to operate in an intelligent transportation system (ITS), the first device comprising:

     a memory storing instructions; and
     a processor configured to operate by executing the instructions,
     wherein operations of the processor comprise:

receiving a vehicle-to-everything (V2X) message related to a maneuver sharing and coordinating service (MSCS) from a second device; and

determining whether to perform cooperative driving with the second device based on the V2X message, wherein the first device determines to perform the cooperative driving with the second device based on that a reliability assessment of the V2X message is more than or equal to a threshold, and

wherein the reliability assessment is performed based on a correlation between first object information included in the V2X message and second object information obtained by a sensor equipped in the first device.

11. The first device of claim 10, further comprising a transceiver configured to transmit or receive wireless signals under control of the processor,

12. The first device of claim 10, wherein the first device is a V2X user equipment (UE), a vehicle, or a road side unit (RSU).

# FIG. 1

# FIG. 2

# FIG. 3

AMF / UPF

AMF / UPF

NGC

50

50

NG - C/U    NG - C/U

NG - C/U    NG - C/U

40

40

Xn

gNB

gNB

NG - RAN

40

Xn

Xn

gNB

10

UE

# FIG. 4

| One Frame (10ms) |
|---|

| Half-Frame (5ms) | Half-Frame (5ms) |
|---|---|

| Subframe 0 (1ms) | ... | Subframe 4 (1ms) | Subframe 5 (1ms) | ... | Subframe 9 (1ms) |
|---|---|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 5

Resource grid

# FIG. 6

PU5-U

(a)

PU5-U

(b)

# FIG. 7

BS (e.g. eNB or gNB)

UE1                    UE2

# FIG. 8

# FIG. 9

# FIG. 10

# FIG. 11

# FIG. 12

# FIG. 13

A05 Input Vidieo Frame Image

A09 Input BSM

A06 Detect general (or V2X message-based) video object recognition bounding box

A07 Perform CNN

A08 Classification

A10 Is there bounding box covering video frame pixel location corresponding to DE_Latitude and DE_Longitude — N

A11 classification of bounding box covering video frame pixel location corresponding to DE_Latitude and DE_Longitude== vehicle — N

A12 If one out of three is "N"?

A13 location/ appearance information detection loop count < 2? — N

A14 Calculate estimated width and length of object from width and length of detected bounding box

A15 minor detection positioning error occur — N

A16 Stop maneuver driving

A23 percent error between DE_VehicleWidth and estimated object width and percent error between DE_VehicleLength and estimated object length below 10%? — N

A24 percent error between DE_Heading and bounding box movement direction (degree) below 5%? — N

A25 If one out of two is "N"?

A17 severe detection positioning error occur — N

A18 No Report

A26 percent error between DE_Speed and bounding box movement speed (m/s) below 5%? — N

A27 movement information detection loop count < 2 — N

A19 Report discrepancy to cooperating vehicles with BSM, MSG, object detection result data, and warning message

A28 Maneuver Negotiation state

A20 MB determined — N

A21 No Report

A22 Report discrepancy to MA with BSM, MSG, and object detection result data

Movement information detection loop

Location/appearance information detection loop

# FIG. 14

# FIG. 15

```
Receive V2X message                          C05

        │
        ▼

Determine whether to perform                 C10
cooperative driving
```

# FIG. 16

# FIG. 17

| ITS PDU Header | Originating ITS-S Container | Position Enhancement Container | Manoeuvre Coordination Container |
|---|---|---|---|

| ITS Station ID.1 | Delta Reference Time | Advised Manoeuvre |
|---|---|---|

| ITS Station ID.N | Delta Reference Time | Advised Manoeuvre |
|---|---|---|

# FIG. 18

MSCS session termination

Maneuver driving participant/environment recognition (MSCS Awareness) — D05

MSCS session termination

RV1's MSCSsupportable < 2 — D06

RV1's eventLowBattery flag = Set(1) — D07

RV1's BasicVehicleClass == (0,1, 60~69) — D08

RV1's VruProfileAndSub Profile = animal — D09

MSCS session initiation

Maneuver Negotiation (MSCS Negotiation) — D10

MSCS request rejection, cancellation, and message exchange failure

MSCS request acceptance and message exchange progress

MSCS completion success or termination — D11

Maneuver driving execution

41

# FIG. 19

# FIG. 20

# FIG. 21

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 22

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

<div align="center">

**INTERNATIONAL SEARCH REPORT**

</div>

| International application No. |
|---|
| **PCT/KR2023/007919** |

**A.    CLASSIFICATION OF SUBJECT MATTER**

**G08G 1/0968**(2006.01)i; **H04W 4/40**(2018.01)i; **B60W 60/00**(2020.01)i; **B60W 40/02**(2006.01)i; **H04W 4/38**(2018.01)i; **H04W 12/12**(2009.01)i; **G06T 7/70**(2017.01)i

According to International Patent Classification (IPC) or to both national classification and IPC

**B.    FIELDS SEARCHED**

Minimum documentation searched (classification system followed by classification symbols)

G08G 1/0968(2006.01); B60W 30/165(2012.01); B60W 50/14(2012.01); G05D 1/02(2006.01); G08G 1/16(2006.01); H04W 12/00(2009.01); H04W 12/10(2009.01); H04W 12/12(2009.01); H04W 24/08(2009.01); H04W 4/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메뉴버(maneuver), 차량(vehicle), 교통(traffic), 메시지(message), 주행(drive), 신뢰도(reliability), 협력(cooperation)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2019-0098093 A (LG ELECTRONICS INC.) 21 August 2019 (2019-08-21)<br>See paragraphs [0050]-[0370] and claims 1-8. | 1-12 |
| Y | KR 10-2018-0042034 A (HYUNDAI MOTOR COMPANY) 25 April 2018 (2018-04-25)<br>See claims 1-14. | 1-12 |
| A | KR 10-2235711 B1 (WISE AUTOMOTIVE CORPORATION) 05 April 2021 (2021-04-05)<br>See claims 1-3. | 1-12 |
| A | KR 10-2018-0102221 A (LG ELECTRONICS INC.) 14 September 2018 (2018-09-14)<br>See claims 1-7. | 1-12 |
| A | US 2018-0239361 A1 (FORD GLOBAL TECHNOLOGIES, LLC.) 23 August 2018 (2018-08-23)<br>See entire document. | 1-12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2023** | **21 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/007919**

| Patent document cited in search report | | | Publication date (day/month/year) | Patent family member(s) | | | Publication date (day/month/year) |
|---|---|---|---|---|---|---|---|
| KR | 10-2019-0098093 | A | 21 August 2019 | KR | 10-2226067 | B1 | 11 March 2021 |
| | | | | US | 2019-0385450 | A1 | 19 December 2019 |
| KR | 10-2018-0042034 | A | 25 April 2018 | CN | 107959943 | A | 24 April 2018 |
| | | | | CN | 107959943 | B | 23 September 2022 |
| | | | | EP | 3310079 | A1 | 18 April 2018 |
| | | | | EP | 3310079 | B1 | 30 June 2021 |
| | | | | ES | 2885016 | T3 | 13 December 2021 |
| | | | | JP | 2018-067281 | A | 26 April 2018 |
| | | | | JP | 6925120 | B2 | 25 August 2021 |
| | | | | KR | 10-1896783 | B1 | 18 October 2018 |
| | | | | US | 10019299 | B2 | 10 July 2018 |
| | | | | US | 2018-0107532 | A1 | 19 April 2018 |
| KR | 10-2235711 | B1 | 05 April 2021 | KR | 10-2021-0035475 | A | 01 April 2021 |
| KR | 10-2018-0102221 | A | 14 September 2018 | EP | 3412087 | A1 | 12 December 2018 |
| | | | | EP | 3412087 | A4 | 02 October 2019 |
| | | | | EP | 3412087 | B1 | 09 December 2020 |
| | | | | KR | 10-2056344 | B1 | 16 December 2019 |
| | | | | US | 10567933 | B2 | 18 February 2020 |
| | | | | US | 2019-0058981 | A1 | 21 February 2019 |
| | | | | WO | 2017-135783 | A1 | 10 August 2017 |
| US | 2018-0239361 | A1 | 23 August 2018 | CN | 106873580 | A | 20 June 2017 |
| | | | | CN | 106873580 | B | 13 July 2021 |
| | | | | DE | 102016120508 | A1 | 11 May 2017 |
| | | | | GB | 2545550 | A | 21 June 2017 |
| | | | | MX | 2016014481 | A | 03 May 2018 |
| | | | | RU | 2016-143345 | A | 10 May 2018 |
| | | | | US | 2017-0131719 | A1 | 11 May 2017 |
| | | | | US | 9983591 | B2 | 29 May 2018 |

Form PCT/ISA/210 (patent family annex) (July 2022)